# DEMANDE DE BREVET EUROPEEN

(11) **EP 0 744 123 A1**
(43) Date de publication de la demande: **27.11.1996**
(21) Numéro de dépôt: 96460016.7
(22) Date de dépôt: 22.03.1996
(51) Int. Cl.: A01K 1/12

(54) **Porte pont rotative**

(30) Priorité: 23.05.1995 FR 9506399
(71) Demandeur: Duhamel, Gilbert, 53150 La Chapelle Rainsouin (FR)
(72) Inventeur: Duhamel, Gilbert, 53150 La Chapelle Rainsouin (FR)

(57) **Abrégé**

Cette invention concerne un dispositif d'une porte rotative utilisable en agriculture dans les salles de traite.
Cette porte permet la circulation de la laiterie à la salle de traite sans inconvénient et avec libre accès tout en facilitant le passage pour la sortie des vaches.

Basée sur 2 pivots 7 et 8 et d'un chassis tubulaire 1, cette porte bénéficie d'une rotation quart de tour évitant l'accès par 2 escaliers pour aller traire les vaches. A l'aide d'un plateau 2 servant de pont horizontal, d'une porte vitrée 14 séparant la laiterie de la salle de traite, cette porte rotative permet un passage tant humain que bovin.

## Description

La présente invention concerne un dispositif dit porte rotative, prévue pour le domaine agricole et plus précisément dans les salles de traite. Cette porte permet soit d'être un passage des vaches d'un quai à i'autre en fin de traite, soit un passage du trayeur de la laiterie à la salle de traite.

Les anciennes salles de traite nécessitaient 2 escaliers pour monter, traverser le quai et descendre afin de se rendre de la laiterie à la salle de traite et inversement.

Aujourd'hui, les salles de traite sont de plein pied avec un passage au centre des 2 quais pour la circulation des trayeurs. Lors du transport de bidons de 20 L. de lait, le chevauchement de la barrière contournant le quai supérieur est une étape trop difficile. C'est pourquoi, une solution devait être envisagée pour éviter les escaliers et les maux de dos.

En effet, l'invention d'une porte servant à la fois de passage pour la sortie des vaches et d'entrée/sortie de la laiterie à la salle de traite résoud tous les problèmes.

Les dessins annoncés illustrent :

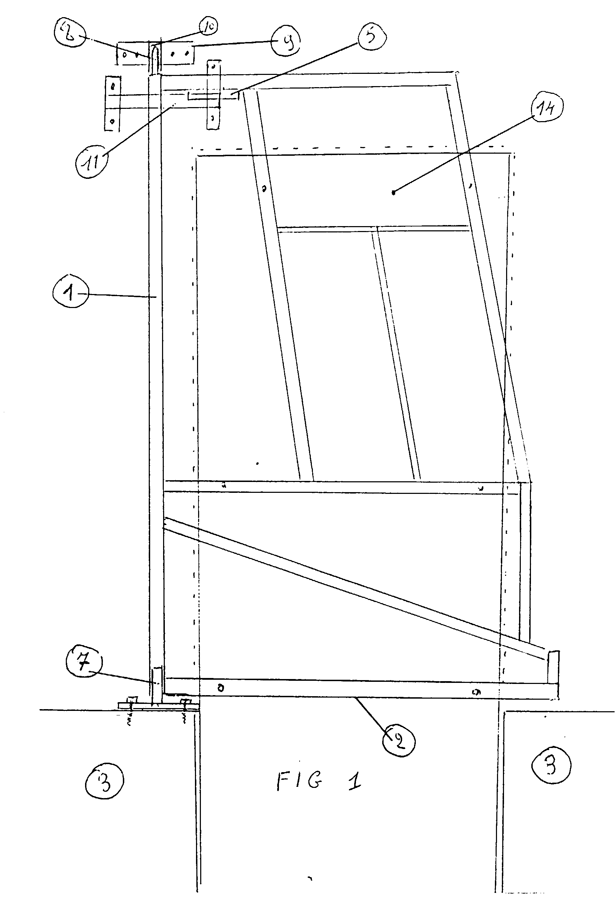

La figure 1 représente la porte formée offrant un pont pour la circulation des vaches.

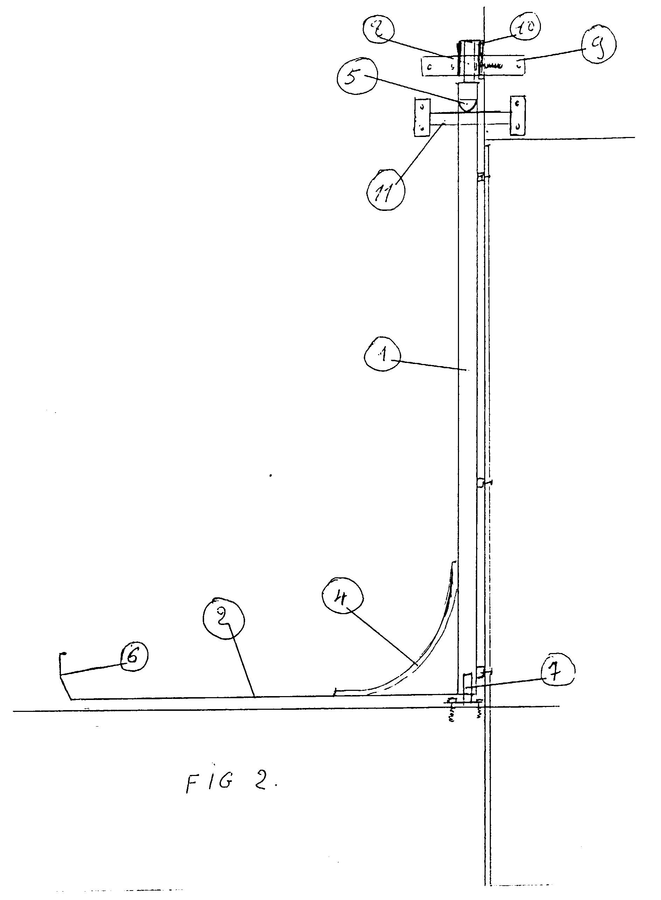

La figure 2 représente la porte rotative ouverte libérant l'accès des 2 pièces pour les vachers.

La figure 3 représente la demi-lune permettant la rotation.

La figure 4 représente le verrouillage de la porte.

En référence à ces dessins, le dispositif comporte un bâtit tubulaire 1 supportant le pont (ou passage bovins) 2 et situé à une hauteur de 1 cm du béton 3 de la partie supérieure des 2 quais par l'élasticité des 2 pièces 4 ; le plateau 2 ne touche pas la partie supérieure des quais 3 à moins du passage des vaches (par leur poids).

Lors de la rotation en ouverture par le vacher, l'arrondi du vérrouillage (bosse) 5 élève la porte de 2 cm, ce qui évite tout frottement avec le béton des quais 3. Une bordure 6 est prévue à cet effet pour éviter que les vaches glissent sur le quai inférieur dans la salle de traite : plaque inox fixée au pont avec une remontée de 20 cm 6.

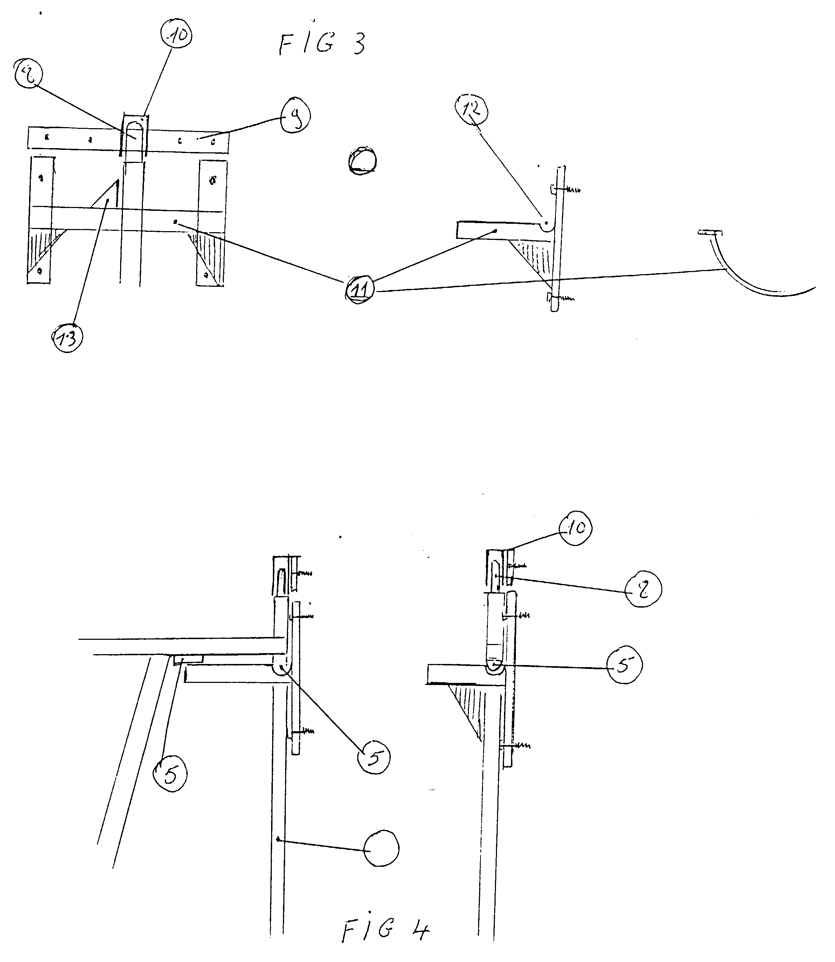

La porte est fixée par un pivot 7 scellé sur la partie supérieure du quai 3 par 2 vis tire-fond dans le béton qui assure la rotation à la base. L'axe supérieur du portail 8 tenu par 4 tire-fond sur une platine 9 dans le mur, assure l'équilibre de la porte par un axe 8 en tournant dans un tube 10 soudé sur la fixation 9. La pièce forgée en demi-lune (figure 3) 11 assure le verrouillage au moment du passage de la vache par son poids grâce à un arrondi creusé (gorge) 12 sur le fer en demi-lune 11 ceci permet d'empêcher la remontée de la porte et l'ouverture de celle-ci.

Dès la sortie de la vache, la bosse 5 faite pour assurer le verrouillage dans la demi-lune 11 se libère et peut donc glisser un quart de tour sur la demi-lune 11 jusqu'à la butte d'arrêt 13 qui retient la porte afin qu'elle n'heurte pas le mur de la salle de traite.

La porte caractérisée par un système de rotation d'un quart de tour de gauche à droite permet soit de faire un pont pour le passage des vaches vers la sortie, qui de toute évidence ferme et isole la laiterie de la salle de traite par une porte vitrée 14 fixée par 6 caoutchouc (tampons) sur la porte rotative tout en laissant la visibilité d'une salle à l'autre ; soit de droite à gauche formant un passage humain de la laiterie à la salle de traite en bloquant la sortie des vaches.

La porte rotative est caractérisée par la séparation de la laiterie de la salle de traite par une vitre 14 préservant le côté hygiène nécessaire.

Elle permet un accès pour le vacher de la laiterie à la salle de traite sans monter et descendre des escaliers et bien sûr de traverser ces 2 pièces avec beaucoup plus de facilité lors du port du sceau de lait.

Elle est constitué d'un plateau servant de pont horizontal 2 pour la circulation des vaches vers la sortie et avec toute sécuruté grâce au verrouillage automatique 5 et 12 qui se fait grâce au poids de l'animal et à la rampe de sécurité 6 qui évite aux vaches de glisser.

L'ouverture devient très harmonieuse, sans effort physique, la rotation se fait sur 2 pivots 7 et 8 et peut être actionnée à tout moment.

La porte rotative est recommandée pour tout vacher souhaitant un accès privilégié à la salle de traite avec une simplicité d'utilisation et une sécurité très appréciée : moins de fatique, pas de dérapage, propreté assurée, accès facilité, sortie rapide pour l'animal, visibilité par la porte en verre, pas de soulèvement de pont pour traverser (maux de dos).

L'avantage que donnerait cette porte rotative à tout utilisateur de salle de traite, nous encourage à la faire commercialiser industriellement et la soutenir par un brevet afin de protéger nos intérêts.

## Revendications

1. Dispositif dit porte rotative, prévue pour le domaine agricole et en particulier pour les salles de traite, caractérisé en ce qu'il comporte un système de rotation d'un quart de tour, de gauche à droite permettant de réaliser un pont pour le passage des vaches vers la sortie de la salle de traite, et de rotation de droite à gauche permettant de réaliser un passage humain, de la laiterie à la salle de traite, en bloquant la sortie des vaches.

2. Dispositif dit de porte rotative selon la revendication 1 caractérisée en ce qu'il est constitué d'une vitre 14 .

3. Dispositif dit de porte rotative selon la revendication 1 ou 2, caractérisé en ce qu'il comporte un plateau servant de pont horizontal 2 pour la circulation des vaches vers la sortie, verrouillé automatiquement 5 et 12, grâce au poids de l'animal, et qui comporte une rampe de sécurité 6 pour éviter aux vaches de glisser.

4. Dispositif dit de porte rotative selon l'une des revendications précédentes caractérisé en ce que la rotation se fait sur deux pivots 7 et 8.
